# EUROPÄISCHE PATENTANMELDUNG

(11) **EP 2 174 763 A2**
(43) Veröffentlichungstag der Anmeldung: **14.04.2010**
(21) Anmeldenummer: 09012126.0
(22) Anmeldetag: 24.09.2009
(51) Int. Cl.: B29B 13/06, F26B 17/12

(54) **Trocknungsanlage für Kunststoffgranulat**

(30) Priorität: 08.10.2008 DE 202080013225 U
(71) Anmelder: Digicolor GmbH, 33609 Bielefeld (DE)
(72) Erfinder: Siekmann, Ernst-August, 32049 Herford (DE); Hain, Hans-Jürgen, 33178 Borchen (DE)
(74) Vertreter: Wiebusch, Manfred

(57) **Zusammenfassung**

Trocknungsanlage für Kunststoffgranulat, mit einem Trocknungsbehälter (10), der eine zylindrische Umfangswand (14) aufweist, einem Lufttrockner (24), und einem Umwälzsystem (22) zum Umwälzen von Luft durch den Trocknungsbehälter und den Lufttrockner, **dadurch gekennzeichnet, daß** das Umwälzsystem (22) und der Lufttrockner (24) eine integrierte Baugruppe (12) bilden, deren Grundriß auf einer Seite durch eine zu der zylindrischen Wand (14) des Trocknungsbehälters (10) komplementäre Kontur (20) begrenzt wird und die unmittelbar an diese zylindrische Wand (14) angebaut ist.

## Beschreibung

Die Erfindung betrifft eine Trocknungsanlage für Kunststoffgranulat, mit einem Trocknungsbehälter, der eine zylindrische Umfangswand aufweist, einem Lufttrockner und einem Umwälzsystem zum Umwälzen von Luft durch den Trocknungsbehälter und den Lufttrockner.

In der kunststoffverarbeitenden Industrie werden solche Trocknungsanlagen dazu benötigt, das Kunststoffgranulat vor dem Einschmelzen oder Plastifizieren zu trocknen, damit der Kunststoff einen für die weitere Verarbeitung optimalen Feuchtigkeitsgehalt hat. Je nach chemischer Beschaffenheit des verarbeitenden Kunststoffmaterials müssen bestimmte Bedingungen hinsichtlich der Trocknungszeit, der Trocknungstemperatur und des Trocknungsluftdurchsatzes (Strömungsgeschwindigkeit der Luft im Trocknungsbehälter) eingehalten werden. Der Restfeuchtegehalt des Granulats muß in der Regel unterhalb eines bestimmten Höchstwertes liegen, darf jedoch in einigen Fällen auch einen gewissen Mindestwert nicht unterschreiten, da sich auch eine Übertrocknung des Granulats für die weitere Verarbeitung als schädlich erweisen kann.

Um dem wechselnden Bedarf an getrocknetem Granulat Rechnung zu tragen, werden zumeist mehrere Trocknungsbehälter eingesetzt, die an ein zentrales Umwälzsystem und einen zentralen Lufttrockner angeschlossen sind. Der Lufttrockner wird zumeist durch ein Molekularsieb gebildet, das von Zeit zu Zeit regeneriert werden muß. Typischerweise enthält der Lufttrockner mindestens zwei Molekularsiebe, von denen jeweils eines zum Trocknen der Luft verwendet wird, während das andere regeneriert wird.

Ein Beispiel einer solchen Trocknungsanlage wird in EP 1 083 033 beschrieben.

Als Lufttrockner sind auch sogenannte Honeycomb-Trockner bekannt, die nur ein einziges Molekularsieb in der Form eines zylindrischen Rotors mit Wabenstruktur aufweisen. Die Luft wird dann in mindestens zwei getrennten, parallelen Strömen in axialer Richtung durch den Rotor geleitet. Einer dieser Luftströme besteht aus der zu trocknenden Luft, während der andere zur Regeneration des Molekularsiebes dreht. Durch langsame Drehung des Rotors wird erreicht, daß jeder Sektor des Rotors nacheinander die verschiedenen Luftströme durchquert und somit abwechselnd im Trocknungsbetrieb und im Regenerationsbetrieb arbeitet.

Herkömmliche Trocknungsanlagen haben den Nachteil, daß sie relativ viel Platz beanspruchen, was einen flexiblen, an wechselnde Produktionsweisen des kunststoffverarbeitenden Betriebes angepaßten Einsatz erschwert. Außerdem erweist es sich als schwierig, das Umwälzsystem so zu steuern, daß in allen Trocknungsbehältern die Vorgaben hinsichtlich Trocknungszeit, Luftdurchsatz und Restfeuchtegehalt des Granulats mit hinreichender Genauigkeit eingehalten werden können. Die relativ komplexen Leitungssysteme, die zur Verteilung der Trocknungsluft auf die verschiedenen Trocknungsbehälter dienen, führen außerdem zu beträchtlichen Druck- und Wärmeverlusten und damit zu einem erhöhten Energieverbrauch.

Als Trocknungsbehälter werden generell Behälter mit einer zylindrischen Grundform bevorzugt, weil sie am ehesten eine gleichmäßige Verweilzeit aller Granulatpartikel im Trocknungsbehälter und damit eine gleichmäßige Trocknungsbehandlung sicherstellen können.

Aufgabe der Erfindung ist es, eine Trocknungsanlage zu schaffen, die sich durch geringen Platzbedarf auszeichnet, sich flexibel einsetzen läßt und eine genaue Einhaltung der Trocknungsbedingungen erleichtert.

Diese Aufgabe wird erfindungsgemäß dadurch gelöst, daß das Umwälzsystem und der Lufttrockner eine integrierte Baugruppe bilden, deren Grundriß auf einer Seite durch eine zu der zylindrischen Wand des Trocknungsbehälters komplementäre Kontur begrenzt wird und die unmittelbar an diese zylindrische Wand angebaut ist.

Erfindungsgemäß hat somit die Trocknungsanlage, die aus einem oder mehreren Trocknungsbehältern bestehen kann, einen modularen Aufbau, bei dem jedem Trocknungsbehälter sein eigener Lufttrockner und ein zugehöriges Umwälzsystem zugeordnet ist. Damit werden zunächst die steuer- und regelungstechnischen Probleme vermieden, die sich bei herkömmlichen Trocknungsanlagen aus der Notwendigkeit ergeben, die Trocknungsluft bedarfsgerecht auf die verschiedenen Behälter zu verteilen. Insbesondere kann so bei jedem Modul der erfindungsgemäßen Trocknungsanlage der Luftdurchsatz präzise an die Vorgaben für das jeweils verarbeitete Granulat angepaßt werden.

Dadurch, daß jeder Trocknungsbehälter unmittelbar mit dem zugehörigen Lufttrockner "umbaut" ist, wird ein geringer Platzbedarf erreicht, und es ergeben sich kurze Leitungswege innerhalb des Umwälzsystems und damit entsprechend geringe Energieverluste.

Die Module können wahlweise als Einzelanlagen am jeweiligen Verbrauchsort betrieben oder in einer zentralen Trocknungsstation zu einer Batterie zusammengefaßt werden. Wahlweise ist es auch möglich, den Trocknungsbehälter mit der zugehörigen Trocknerbaugruppe unmittelbar auf dem Verbraucher, beispielsweise einem Plastifizierer, zu installieren. Insgesamt wird so eine sehr hohe Flexibilität beim Einsatz der Trocknungsanlage erreicht.

Vorteilhafte Ausgestaltungen und Weiterbildungen der Erfindung sind in den Unteransprüchen angegeben.

In einer besonders bevorzugten Ausführungsform wird der Lufttrockner durch einen Honeycomb-Trockner gebildet, bei dem sich der Taupunkt der erzeugten Trocknungsluft unabhängig von den Witterungsbedingungen (Feuchtigkeitsgehalt der Umgebungsluft) einstellen und konstant halten läßt, so daß eine präzise Steuerung oder Regelung des Restfeuchtegehalts ermöglicht wird.

Im folgenden wird ein Ausführungsbeispiel anhand der Zeichnung näher erläutert.

Es zeigen:
- Fig. 1 bis 3: einen Grundriß, eine Frontansicht und eine Seitenansicht eines Moduls einer erfindungsgemäßen Trocknungsanlage;
- Fig. 4: einen schematischen Grundriß eines Honeycomb-Lufttrockners;
- Fig. 5: ein Blockdiagramm der erfindungsgemäßen Trocknungsanlage; und
- Fig. 6: eine Batterie aus mehreren Modulen der in Fig. 1 bis 3 gezeigten Art.

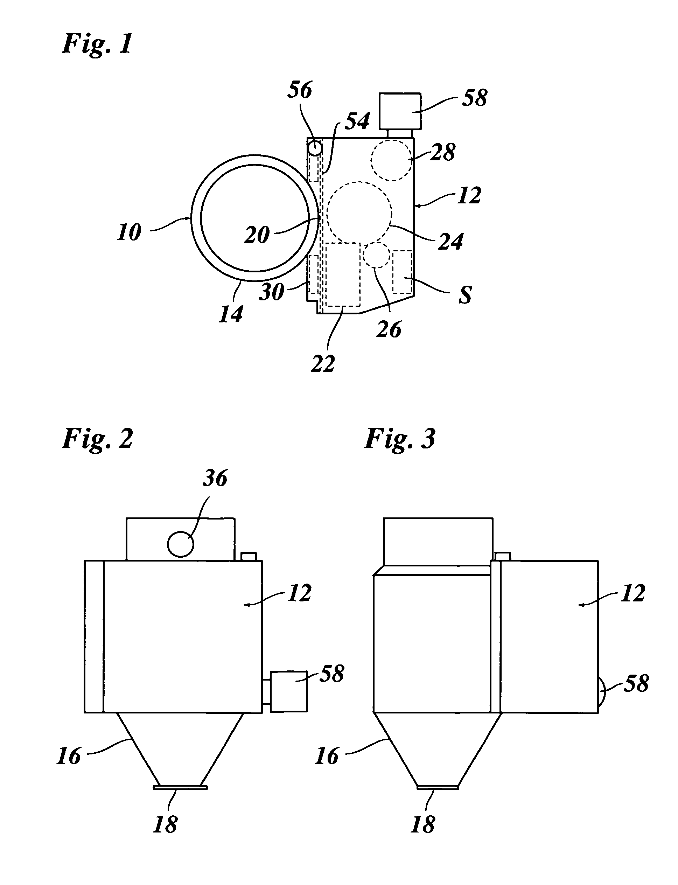

Das in Fig. 1 bis 3 gezeigte Modul einer Trocknungsanlage umfaßt einen Trocknungsbehälter 10 mit rotationssymmetrischem Grundriß und eine integrierte Luftrocknerbaugruppe 12, die unmittelbar an den Trocknungsbehälter 10 angebaut ist.

Der Trocknungsbehälter 10 ist im oberen Bereich zylindrisch ausgebildet und weist demgemäß in diesem Bereich eine zylindrische Umfangswand 14 auf. An den zylindrischen Teil schließt sich nach unten ein Trichter 16 an, der sich nach unten konisch verjüngt und am unteren Ende durch einen Schieber 18 für den dosierten Austrag des getrockneten Granulats abgeschlossen ist.

Die Lufttrocknerbaugruppe 12 hat die Form eines im wesentlichen quaderförmigen Schrankes, weist jedoch im Grundriß (Fig. 1) auf der dem Trocknungsbehälter 10 zugewandten Seite eine konkave Kontur 20 auf, die an die Krümmung der zylindrischen Wand 14 des Trocknungsbehälters 10 angepaßt ist. Dies erlaubt es, die Luftrocknerbaugruppe 12 in besonders platzsparender Weise an den Trocknungsbehälter 10 anzubauen.

Einige der wesentlichen Komponenten der Luftrocknerbaugruppe 12 sind in Fig. 1 gestrichelt eingezeichnet. Bei diesen Komponenten handelt es sich um ein Gebläse 22, einen Honeycomb-Lufttrockner 24 mit zugehörigem Antriebsmotor 26, einen Lufterhitzer 28, winen wärmetaushcer 30 und eine elektronische Steuereinrichtung S. Das Gebläse 22 sowie verschiedene, in Fig. 1 nicht gezeigte Leitungen, die die einzelnen Komponenten der Lufttrocknerbaugruppe 12 miteinander und mit dem Trocknungsbehälter 10 verbinden, bilden zusammen ein Umwälzsystem für die Trocknungsluft.

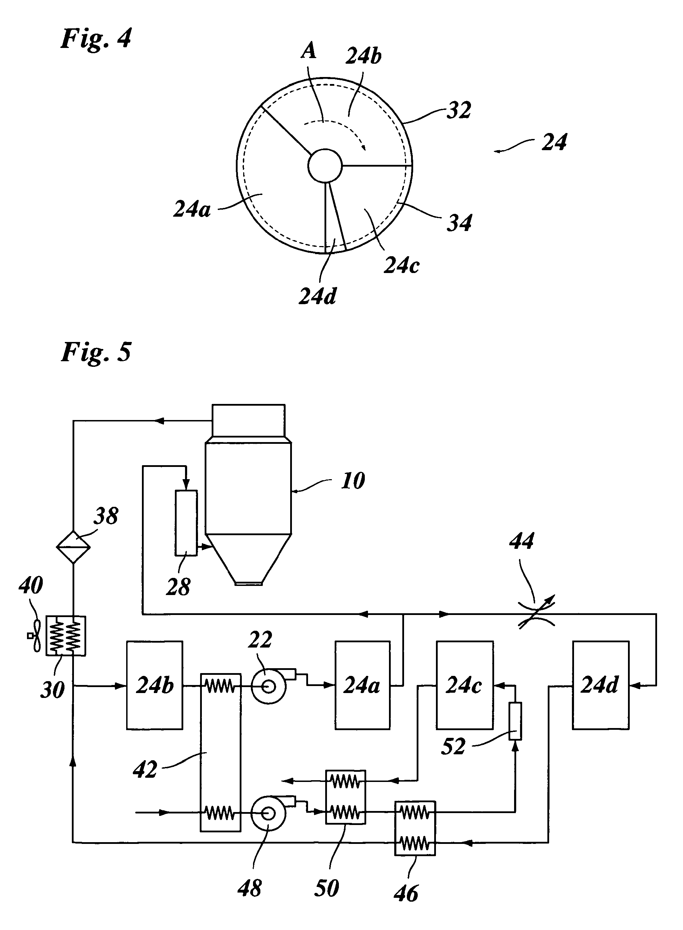

Die Funktionsweise der Trocknungsanlage soll nun anhand der Fig. 4 und 5 näher erläutert werden.

Der Honeycomb-Lufttrockner 24 weist ein zylindrisches Gehäuse 32 auf, das in Fig. 4 in einem schematischen Schnitt dargestellt ist. Dieses Gehäuse 32 ist durch radiale Trennwände in vier sektorförmige Kammern 24a - 24d unterteilt, die in axialer Richtung von verschiedenen, voneinander getrennten Luftströmungen durchströmt werden, wie im folgenden noch näher erläutert werden wird.

Im Inneren des Gehäuses 32 ist ein Rotor 34 angeordnet, der durch ein Molekularsieb mit Wabenstruktur gebildet wird und langsam in Richtung des Pfeils A rotiert, so daß jede Zone des Rotors nacheinander die Kammern 24a - 24d durchläuft.

In Fig. 5 ist das gesamte Modul der Trocknungsanlage als Blockdiagramm dargestellt. Der Trocknungsbehälter 10 wird wie üblich von oben mit Granulat beschickt, das nach einer gewissen Verweilzeit durch den Schieber am unteren Ende ausgetragen wird. Während der Verweilzeit im Trocknungsbehälter wird das Granulat von Trocknungsluft umströmt, die im Lufttrockner 24 getrocknet und dann im Lufterhitzer 28 erhitzt wurde. Diese Luft durchströmt den Trocknungsbehälter in vertikaler Richtung von unten nach oben und tritt am oberen Ende des Trocknungsbehälters durch einen Auslaßstutzen 36 aus (siehe Fig. 2). Die aus dem Auslaßstutzen austretende Luft hat eine hohe Temperatur und ist mit Feuchtigkeit beladen, die dem Granulat entzogen wurde. Diese Luft wird zunächst in einem Filter 38 gefiltert und dann im Wärmetauscher 30 mit Umgebungsluft gekühlt, die ggf. aktiv mit Hilfe eines Gebläses 40 angesaugt werden kann.

Die so gekühlte Rückluft vom Trocknungsbehälter 10 wird dann durch die Kammer 24b des Honeycomb-Lufttrockners 24 geleitet und dort in einer ersten Stufe gekühlt. Anschließend durchströmt die Luft einen weiteren Wärmetauscher 42, in dem die Luft im Wärmeaustausch mit Umgebungsluft weiter gekühlt wird. Das Gebläse 22 fördert dann die Rückluft, die die Kammer 24b und den Wärmetauscher 42 passiert hat, durch die Kammer 24a des Honeycomb-Lufttrockners 24, die eine zweite Trocknungsstufe bildet. Ein Teil der getrockneten Luft wird dann über den Lufterhitzer 28 wieder in den Trocknungsbehälter 10 geleitet.

Ein anderer Teil der in der Kammer 24a getrockneten Luft wird jedoch über ein einstellbares Drosselventil 44 abgezweigt und durch die Kammer 24d des Honeycomb-Lufttrockners 24 geleitet. Anschließend wird diese Luft über einen Wärmetauscher 46 wieder zur Kammer 24b zurückgeleitet.

Ein weiteres Gebläse 48 saugt über den Wärmetauscher 42 Außenluft an und leitet diese über einen weiteren Wärmetauscher 50, den Wärmetauscher 46 und einen Lufterhitzer 52 in die Kammer 24c des Honeycomb-Luftdruckes 24. Diese erhitzte Luft dient dazu, den Teil des Rotors 34 zu regenerieren, der die Kammer 24c durchläuft. Im Wärmetauscher 50 wird dieser Luft dann wieder ein Teil ihrer Wärme entzogen, und sie wird wieder in die Umgebung abgegeben.

Der Teil des Rotors 34, der in der Kammer 24c regeneriert wurde, läuft dann durch die Kammer 24d und wird dort mit der getrockneten Luft gekühlt, die über das Drosselventil 44 abgezweigt wurde. Da die Kühlung nicht mit Umgebungsluft erfolgt, ist der Zustand und damit die Trocknungsfähigkeit des regenerierten Molekularsiebes bei Eintritt in die Kammer 24a des Lufttrockners unabhängig vom Feuchtigkeitsgehalt der Umgebungsluft.

In der Kammer 24a befindet sich stets der Teil des Rotors 34, der gerade frisch regeneriert und dann in der Kammer 24d gekühlt wurde und somit die höchste Trocknungsfähigkeit aufweist. Deshalb bildet die Kammer 24a die zweite Trocknungsstufe, mit der der Feuchtigkeitsgehalt der Trocknungsluft auf ein Minimum reduziert wird. Anschließend durchläuft der Rotor die Kammer 24b, die die erste Trocknungsstufe bildet.

Die in Fig. 4 und 5 gezeigten Wärmetauscher 30, 42, 46 und 50 dienen dazu, einen größten Teil der in den Lufterhitzern 28 und 52 erzeugten Wärme wieder zurückzugewinnen. Wahlweise kann jedoch auch auf einige dieser Wärmetauscher verzichtet werden. Ebenso versteht es sich, daß die Gebläse 22 und 48 nicht notwendigerweise an der in Fig. 5 gezeigten Stelle angeordnet zu sein brauchen, sondern auch an anderer geeigneter Stelle in dem Umwälzsystem sitzen können.

Wie Fig. 1 zeigt, ist der Wärmetauscher 30 in dem Teil der Trocknerbaugruppe 12 untergebracht, der direkt dem Trocknungsbehälter 10 zugewandt ist. Dieser Teil ist durch eine Trennwand 54 vom übrigen Teil der Trocknerbaugruppe 12 abgetrennt und in der Mitte durch die konkave Kontur 20 eingeschnürt. Der Wärmetauscher läßt sich hier besonders platzsparend unterbringen, wobei die beiden durch die Kontur 20 voneinander getrennten Abteile über Schläuche verbunden sein können, die durch Schlitze in der Trennwand 54 hindurchgeführt sind. Diese Anordnung des Wärmetauschers 30 hat zudem den Vorteil, daß die mechanischen Teile der Trocknerbaugruppe von der vom Trocknungsbehälter 10 abgewandten Seite her bequem zugänglich sind, falls Wartungsarbeiten erforderlich sein sollten.

Die Umfangswand 14 des Trocknungsbehälters 10 weist eine gute Wärmeisolierung auf, so daß sie die Temperatur in der von der Trennwand 54 abgetrennten Zone der Trocknerbaugruppe 12 nicht wesentlich erhöht. Die Umgebungsluft, die zur Kühlung der Rückluft in den Wärmetauscher 30 dient, wird über einen in Fig. 1 bis 3 eingezeichneten Ansaugstutzen 56 angesaugt. Weiterhin erkennt man in Fig. 1 bis 3 einen Filter 58, über den die zum Regenerieren des Rotors 34 in der Kammer 24c dienende Luft wieder in die Umgebung abgegeben wird.

Das in Fig. 1 bis 3 gezeigte Modul läßt sich erforderlichenfalls unmittelbar auf einem Verbraucher, beispielsweise einem Plastifizierer montieren. Wahlweise kann dieses Modul jedoch auch auf einem Gestell montiert werden, das es erlaubt, einen Behälter oder Wagen unterhalb des Schiebers 18 aufzustellen, um das ausgetragene Granulat aufzufangen.

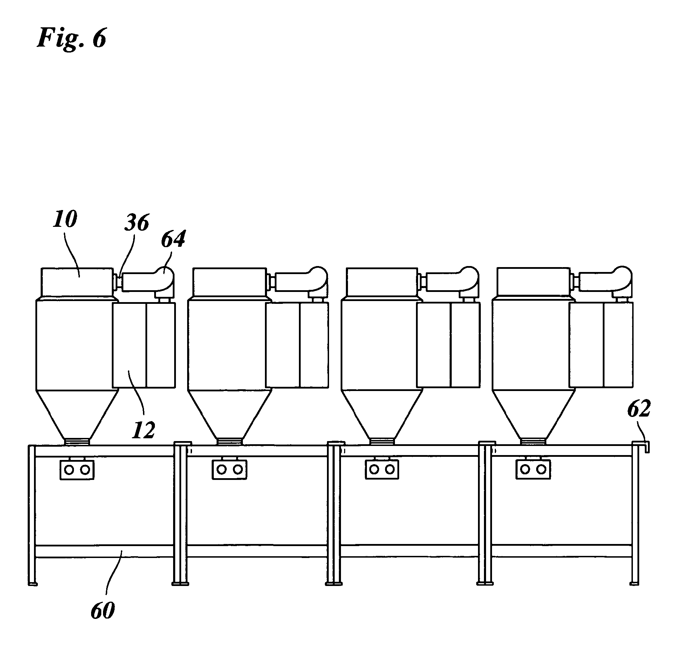

Fig. 6 zeigt eine Batterie aus vier baugleichen Modulen der oben beschriebenen Art, die jeweils auf einem solchen Gestell 60 stehen. Die Gestelle 60 sind unmittelbar nebeneinander aufgestellt, so daß die Module platzsparend zu einer Batterie gruppiert werden können. Jedes Gestell weist außerdem einen Haken 62 auf, der eine formschlüssige Verriegelung mit dem jeweils benachbarten Gestell 60 ermöglicht.

In Fig. 6 erkennt man außerdem auch relativ kurze Schlauchleitungen 64, die die Auslaßstutzen 36 der einzelnen Trocknungsbehälter 10 mit jeweils zugehörigen Trocknerbaugruppen 12 verbinden.

## Patentansprüche

1. Trocknungsanlage für Kunststoffgranulat, mit einem Trocknungsbehälter (10), der eine zylindrische Umfangswand (14) aufweist, einem Lufttrockner (24), und einem Umwälzsystem (22) zum Umwälzen von Luft durch den Trocknungsbehälter und den Lufttrockner, **dadurch gekennzeichnet, daß** das Umwälzsystem (22) und der Lufttrockner (24) eine integrierte Baugruppe (12) bilden, deren Grundriß auf einer Seite durch eine zu der zylindrischen Wand (14) des Trocknungsbehälters (10) komplementäre Kontur (20) begrenzt wird und die unmittelbar an diese zylindrische Wand (14) angebaut ist.

2. Trocknungsanlage nach Anspruch 1, bei der der Lufttrockner (24) ein Trocknungsmedium (34) enthält und Einrichtungen (24c, 24d) zum Regenerieren und Kühlen des Trocknungsmediums aufweist, und bei dem die Einrichtung (24d) zum Kühlen des Trocknungsmediums mit vom Lufttrockner getrockneter Luft gespeist wird.

3. Trocknungsanlage nach Anspruch 1 oder 2, bei der der Lufttrockner (24) ein Honeycomb-Lufttrockner ist.

4. Trocknungsanlage nach Anspruch 3, bei der der Lufttrockner (24) zwei Kammern (24b, 24a) aufweist, die eine erste und eine zweite Trocknungsstufe bilden.

5. Trocknungsanlage nach einem der vorstehenden Ansprüche, bei der die integrierte Baugruppe (12) einen Wärmetauscher (30) zum Trocknen der vom Trocknungsbehälter (10) zurückströmenden Luft aufweist und dieser Wärmetauscher innerhalb der Baugruppe (12) unmittelbar angrenzend an die zur zylindrischen Wand (14) des Trocknungsbehälters komplementäre Kontur (20) angeordnet ist.

6. Trocknungsanlage nach einem der vorstehenden Ansprüche, bei der der Trocknungsbehälter (10) mit der daran angebauten Baugruppe (12) lösbar auf einem Gestell (60) montiert ist.

7. Trocknungsanlage nach Anspruch 6, bei der der Grundriß des Trocknungsbehälters einschließlich der Baugruppe (12) vollständig innerhalb des Grundrisses des Gestells (60) liegt und das Gestell (60) eine Kupplungseinrichtung (62) zum Ankuppeln an ein gleichartiges Gestell (60) aufweist.
